# EUROPEAN PATENT SPECIFICATION

(11) **EP 2 017 553 B1**
(45) Date of publication and mention of the grant of the patent: **28.05.2014**
(21) Application number: 08380213.2
(22) Date of filing: 11.07.2008
(51) Int. Cl.: F24J 2/42, F24J 2/34, A47K 3/28

(54) **A shower**
Dusche
Douche

(30) Priority: 17.07.2007 ES 200701527
(43) Date of publication of application: 21.01.2009
(73) Proprietor: Metalast, S.A. (Sociedad Unipersonal), 08213 Polinya, (Barcelona) (ES)
(72) Inventor: Gimenez Pallares, David, 08213 (Barcelona) (ES); Morral Gispert, Jaume, 08213 (Barcelona) (ES); Ortega Solano, Evaristo, 08213 (Barcelona) (ES)
(74) Representative: Carpintero Lopez, Francisco

(56) References cited:
- EP-A2- 1 142 523
- WO-A2-2005/050119
- DE-U1- 20 103 907

## Description

### FIELD OF THE INVENTION

This shower is provided with a solar collector and is designed for showering in the open air both at swimming pools or on the beach.

### BACKGROUND OF THE INVENTION

The solar collectors are generally made up by a metallic container being provided with an outer coating being fit to absorb the solar heat irradiation and/or the ambient temperature, the shower having the corresponding piping, the cocks for the hot water and for the cold water and the sprinkler or dripper being coupled to said collector.

Several models of showers with solar collector are known, some of them being more complex than others, two types being the most widely used ones: in one of said types the solar collector (being formed by a water reservoir) supports the structure of the shower proper, whereas in the other of said types the body of the shower is securedly attached onto a base, the solar collector being laterally secured to the body of the shower.

This very applicant firm is the holder of the Utility Models Nos. U 9702679 (ES-1065958) and U 200000619 (ES-1045691) (corresponding family member : DE 20103907) having as their object a shower of the second aforementioned type, in the first of those showers the body of the shower being formed by two portions namely being an upper and a lower one, said two portions being fitted to one another, the metallic solar collector having a height that is like that of the lower portion of the shower body.

The shower of the second Model has a lower body to which the solar collector being made of plastics material is securedly attached, this latter resting on a stand, and a tubular upper body ending in the sprinkler or dripper.

### SUMMARY OF THE INVENTION

It is the object of this invention to obtain a solar shower having more advantages and increasing the capacity of the solar collector and improving its manufacture as well as the means for supporting it and having it securedly attached to the shower body, this latter having a more simplified structure.

A characterising feature lies for such a purpose in the make-up of the solar collector, this latter being made up by a metal tube being upperly and inferiorly closed by means of respective separate plugs, the upper plug being securedly attached to the upper end of the vertical body of the shower and the lower plug being securedly attached onto the base, the vertical body of the shower also being securedly attached to said base.

The plugs are each formed by a respective blind bushing being made of plastics material, said blind bushings being plugged-in and secured into the open ends of the metal tube and being integrally formed with radial appendages for the connection of the corresponding pipes.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 illustrates in a perspective view this novel shower;
Fig. 2 shows in a perspective view the vertical body of the shower being securedly attached onto the base;
Fig. 3 is a perspective view showing a detail of the lower side of the base;
Fig. 4 shows in a plan-view the vertical body-solar collector assembly on the base; and
Fig. 5 depicts in an enlarged sectional elevation the make-up of the plugs.

### DETAILED DESCRIPTION

According to the drawings this shower comprises a base (2), a hollow, vertical body (1) being securedly attached onto said base (2) and provided with fittings being characteristic of the showers, said hollow, vertical body (1) making up the support of the solar collector (3).

The solar collector (3) is made up by a black metal tube (4) being upperly and inferiorly closed by means of respective separate plugs (5 and 6) being each formed by a respective blind bushing being made of black plastics material, said plugs being plugged-in and secured into the open ends (7 and 8) of the metal tube (4) and being integrally formed with the appendages (9) for the connection of the corresponding pipes.

The upper plug (5) is securedly attached to the upper end of the body (1) of the shower by means of a screw (10) extending through an oblong hole (11) being provided in a fin (12) of the rearward end of the upper cover (13) of the body (1), and the lower plug (6) is securedly attached to the base (2) by means of three screws extending through respective countersunk holes (14) of the base being aligned with respective recesses (15) being provided in the base (16) of the bushing making up the plug (6).

These plugs (5 and 6) are peripherally provided with a stepped portion (17) where the open ends of the tube (4) are fitted, and with a groove (18) for arranging a seal therein, said plugs being securedly attached to the tube by means of radial screws (19).

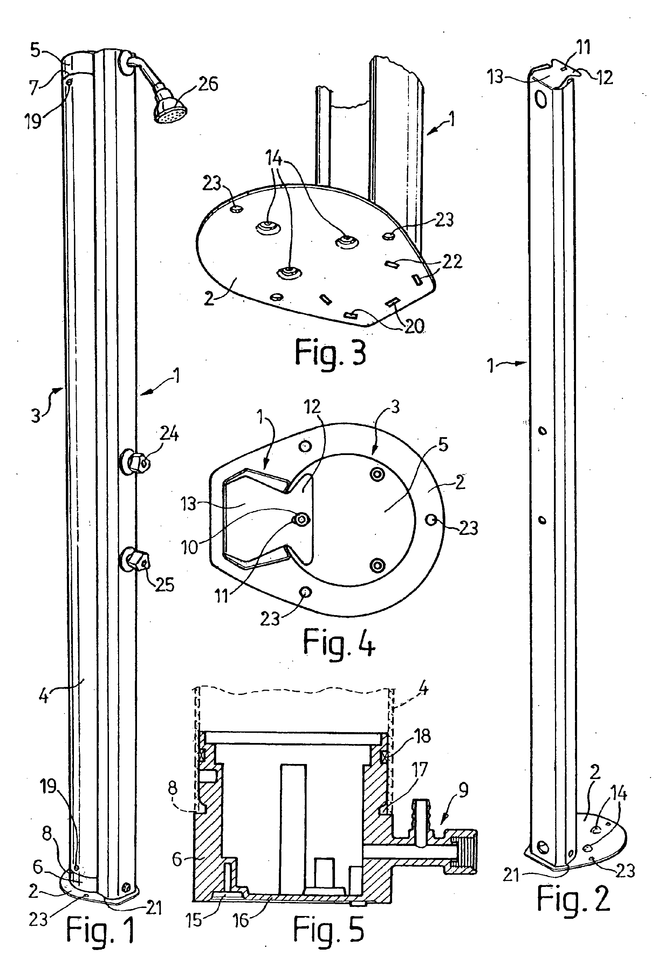

The secured attachment of the vertical body (1) to the base (2) is carried out by means of welding the lugs (20) being provided at the lower edge (21) of the vertical body into respective slits (22) (Fig. 3) being provided in the base (2), this latter having three holes (23) for its fastening to the ground.

Numerals (24 and 25) designate the cocks for the cold or ambient water and for the hot water, respectively, and numeral (26) designates the sprinkler or dripper.

## Claims

1. A shower provided with a solar collector (3) and comprising a base (2), a hollow, vertical body (1) securedly attached onto said base (2), and fittings being characteristic of the showers, said hollow, vertical body (1) making up the support of the solar collector (3); **characterised in that** the solar collector (3) is made up by a metal tube (4) being upperly and inferiorly closed by means of respective separate plugs (5 and 6), the upper plug (5) being securedly attached to the upper end of the vertical body (1) and the lower plug (6) being securedly attached onto the base (2).

2. A shower, as per claim 1, **characterised in that** the plugs (5 and 6) are each formed by a respective blind bushing being made of plastics material, said blind bushings being plugged-in and secured into the open ends (7 and 8) of the metal tube (4) and being integrally formed with radial appendages (9) for the connection of the corresponding pipes.

3. A shower, as per claim 1, **characterised in that** the secured attachment of the vertical body (1) to the base (2) is carried out by means of welding the lugs (20) being provided at the lower edge (21) of the vertical body (1) into respective slits (22) being provided in the base (2).

4. A shower, as per claim 1, **characterised in that** the upper plug (5) is securedly attached to the body (1) by means of a screw (10) in a fin of the rearward end of the upper cover (13) of said body (1).

5. A shower, as per claim 1, **characterised in that** the lower plug (6) is securedly attached to the base (2) by means of screws extending through said base (2) and being threadingly engaged into the base (16) of the bushing making up the plug (6).

## Patentansprüche

1. Dusche versehen mit einem Solarkollektor (3) und umfassend einen Fuß (2), einen hohlen, vertikalen Körper (1), der fest auf dem Fuß (2) befestigt ist, und Ausstattungen, die charakteristisch für die Duschen sind, wobei der hohle, vertikale Körper (D) den Träger des Solarkollektors (3) bildet, **dadurch gekennzeichnet, dass** der Sonnenkollektor (3) durch ein Metallrohr (4) gebildet wird, das im oberen und unteren Teil durch einen entsprechenden Stopfen (5, 6) geschlossen ist, wobei der obere Stopfen (5) fest am oberen Ende des vertikalen Körpers (1) und der untere Stopfen (6) fest auf der Basis (2) befestigt ist.

2. Dusche nach Anspruch 1, **dadurch gekennzeichnet, dass** die Stopfen (5 und 6) jeweils durch eine entsprechende Blindbuchse aus Kunststoffmaterial gebildet sind, die Blindbuchsen in die offenen Enden (7 und 8) des Metallrohres (4) gesteckt und gesichert werden und einstückig mit radialen Fortsätzen (9) für die Verbindung der korrespondierenden Rohre ausgebildet sind.

3. Dusche nach Anspruch 1, **dadurch gekennzeichnet, dass** die feste Befestigung des vertikalen Körpers (1) an der Basis (2) mittels Schweißen der an der Unterkante (21) des vertikalen Körpers (1) vorgesehene Ansätze (20) in entsprechenden, in der Basis (2) vorgesehenen Schlitzen (22) erfolgt.

4. Dusche nach Anspruch 1, **dadurch gekennzeichnet, dass** der obere Stopfen (5) fest am Körper (1) mittels einer Schraube (10) in einer Rippe des hinteren Endes der oberen Abdeckung (13) des Körpers (1) befestigt ist.

5. Dusche nach Anspruch 1, **dadurch gekennzeichnet, dass** der untere Stopfen (6) fest an der Basis (2) mittels durch die Basis (2) erstreckender und gewindemäßig in die Basis (16) der den Stopfen (6) bildendenden Buchse eingreifender Schrauben befestigt ist.

## Revendications

1. Douche munie d'un capteur solaire (3) et comprenant une base (2), un corps vertical creux (1) fixé de manière fixe sur ladite base (2), et des accessoires qui sont caractéristiques de la douche, ledit corps vertical creux (1) composant le support du capteur solaire (3) ; **caractérisée en ce que** le capteur solaire (3) est composé par un tube métallique (4) qui est fermé en haut et en bas au moyen de bouchons séparés (5 et 6) respectifs, le bouchon supérieur (5) étant fixé de manière fixe à l'extrémité supérieure du corps vertical (1) et le bouchon inférieur (6) étant fixé de manière fixe sur le base (2).

2. Douche selon la revendication 1, **caractérisée en ce que** les bouchons (5 et 6) sont chacun formés par une douille borgne respective qui est réalisée à partir de matière plastique, lesdites douilles borgnes étant branchées et fixées dans les extrémités ouvertes (7 et 8) du tube métallique (4) et étant formées de manière solidaire avec des appendices radiaux (9) pour le raccordement des tuyaux correspondants.

3. Douche selon la revendication 1, **caractérisée en ce que** la fixation fixée du corps vertical (1) sur la base (2) est réalisée en soudant les pattes (20) qui sont prévues au niveau du bord inférieur (21) du corps vertical (1) dans des fentes (22) respectives qui sont prévues dans la base (2).

4. Douche selon la revendication 1, **caractérisée en ce que** le bouchon supérieur (5) est fixé de manière fixe sur le corps (1) au moyen d'une vis (10) dans une ailette de l'extrémité arrière du couvercle supérieur (13) dudit corps (1).

5. Douche selon la revendication 1, **caractérisée en ce que** le bouchon inférieur (6) est fixé de manière fixe sur la base (2) au moyen de vis s'étendant à travers ladite base (2) et étant mises en prise par filetage dans la base (16) de la douille composant le bouchon (6).
